(19)

Europäisches
Patentamt
European
Patent Office
Office européen
des brevets

(11)   **EP 2 884 806 B1**

(12)                          **EUROPEAN PATENT SPECIFICATION**

(45) Date of publication and mention
of the grant of the patent:
**11.05.2016 Bulletin 2016/19**

(51) Int Cl.:
***H04W 56/00*** *(2009.01)*

(21) Application number: **13197224.2**

(22) Date of filing: **13.12.2013**

(54) **Timing control in an industrial control system**

Zeitsteuerung in einem industriellen Steuerungssystem

Contrôle temporel dans un système de commande industrielle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Siemens Aktiengesellschaft
80333 München (DE)**

(72) Inventor: **Hulbert, Anthony Peter
Bassett Green, Southampton, Hampshire SO16
3DF (GB)**

(56) References cited:
**EP-A1- 2 012 446         WO-A1-01/18997
WO-A1-97/04614          JP-A- 2006 252 362
US-A1- 2006 006 986    US-A1- 2009 310 522**

Printed by Jouve, 75001 PARIS (FR)

**Description**

The present invention relates to an industrial control system including a controller, an equipment to be controlled by the controller, a wireless network having a wireless master (WM) wire-connected to the controller and a wireless slave (WS) wire-connected to the equipment. Furthermore, the present invention relates to a corresponding method of performing timing control in such industrial control system.

Industrial control systems based on LAN architectures use a standard time-transfer protocol to synchronise all clocks both in rate and actual time. This allows the operations at the controlled equipment, e.g. machines (sensing, application of parameter value changes, etc) to be performed synchronously at all those machines. These timing protocols rely on the ability to send sounding telegrams that measure clock frequencies and round trip delays at arbitrary times.

When wireless communications are introduced to part of an industrial control system the wireless link imposes its own timing structure that prevents the transmission of sounding telegrams at arbitrary times. This effectively breaks the links in the timing protocol, isolating, from a timing perspective, the hardware on one side of the radio link from the hardware on the other side of the link.

The context of this requirement is a wireless sub-system for inclusion within a wired industrial control system which provides bi-directional communications using Time Division Duplex (TDD). The modulation is assumed to be based on Orthogonal Frequency Division Multiplex (OFDM). However, other modulation formats are not excluded from the scope of the invention.

Problems are encountered in including wireless communications within a LAN based wired network from a timing perspective.

US 2009/0310552 A1 discloses a method to reduce an eliminate co-channel and/or adjacent channel interference without using a dedicated timing wire connected to each base station. Base stations are synchronized using a master/slave architecture where slave base stations monitor transmit signals from a master base station to acquire coordinated and synchronized base station timing. In one embodiment, the master base station generates a signal to each of the slave base stations which is used as a reference for timing of their individual transmit and receive modes.

WO 01/18997 A1 describes a wireless communication network system apparatus which is used for isochronous data transfer between node devices. When a predicted master sync code is detected at a slave transceiver, a phase lock mechanism carries out the operation of determining the phase difference between the local slave clock and the incoming pulses. The phase lock mechanism adjusts the phase of the slave clock so that the frequency and the phase of the slave clock is the same as that of the incoming pulses.

Furthermore, WO 97/04614 A1 discloses a synchronized electric network including backup masters. A plurality of devices includes a master unit and a plurality of other units and the master unit transmits a synchronizing signal to at least one of the other units at predetermined intervals. Each of at least two of the other units detects whether a synchronizing signal is received at the respective unit within a predetermined period of time. If not, the respective unit changes from a slave mode of operation to a master mode of operation.

Moreover, EP 2 012 446 A1 describes a higher layer synchronization between base stations in a multicast broadcast system or service. Here a first device may send a time information to a second device which second device responds thereto by initiating a synchronization procedure.

Therefore, it is the object of the present invention to provide an industrial control system with improved flexibility. Furthermore, a corresponding method shall be provided.

According to the present invention there is provided an industrial control system including

- a controller,
- an equipment to be controlled by the controller,
- a wireless network having a wireless master wire-connected to the controller and a wireless slave wire-connected to the equipment, wherein
- the controller is designed to perform timing control of the wireless master according to a timing protocol,
- the wireless master is configured to terminate the timing control and to transmit a system time value to the wireless slave, and
- the wireless slave is designed to synchronize to the wireless master and to initiate timing control of the equipment according to the timing protocol on behalf of the controller.

Due to the fact that the wireless slave performs timing control on behalf of the controller, it represents a timing proxy for the equipment wire-connected to the wireless slave. With this timing control can be automatically performed in each branch of the wireless network.

The industrial control system is configured to perform the following steps for synchronising the wireless master with the wireless slave:

- step a): transmitting a pregiven scheduled transmit time period to the wireless slave,
- step b): transmitting synchronisation data from the wireless master to the wireless slave,
- step c): setting a transmit timing of the wireless slave in dependency of the pregiven scheduled transmit time period and a parameter,
- step d): transmitting a uplink signal from the wireless slave to the wireless master in accordance with the transmit timing,
- step e): measuring an arrival time of the uplink signal with respect to the transmitting of synchronisation data of step c),

- step f): computing adjustment data by the wireless master on the basis of the arrival time and the pregiven scheduled transmit time,

- step g): transmitting the adjustment data from the wireless master to the wireless slave in a downlink signal, and

- step h): adjusting the parameter of the wireless salve in dependency of the adjustment data and repeating at least step c).

The advantage of such method or industrial control system is, that the automatic synchronisation allows for easy introduction of a new wireless device into an existing industrial control system. Due to the recursive algorithm the synchronisation may be performed with low effort and high synchronisation performance can be reached.

Preferably the wireless master is embedded as node in a wired network of the industrial control system. Hereby a wired network is combined with a wireless network which increases flexibility of industrial control systems.

Additionally, the wireless master may include a first order digital recursive filter for measuring the arrival time in step d). Such a filter is commonly available as so called "$\alpha$ Tracker".

A time increment depending on the parameter may be added in a feedback loop of the first order digital recursive filter. Thus a minimally modified $\alpha$ Tracker may be used.

Furthermore, there is provided a method of performing timing control in an industrial control system including a controller, an equipment to be controlled by the controller, a wireless network having a wireless master wire-connected to the controller and a wireless slave wire-connected to the equipment, wherein

- the controller performs timing control of the wireless master according to a timing protocol,

- the wireless master terminates the timing control and transmits a system time value to the wireless slave,

- the wireless slave synchronizes to the wireless master and initiates timing control of the equipment according to the timing protocol on behalf of the controller.

For synchronising the wireless master with the wireless slave the method includes the steps of

- step a): transmitting a pregiven scheduled transmit time period to the wireless slave,

- step b): transmitting synchronisation data from the wireless master to the wireless slave,

- step c): setting a transmit timing of the wireless slave in dependency of the pregiven scheduled transmit time period and a parameter,

- step d): transmitting a uplink signal from the wireless slave to the wireless master in accordance with the transmit timing,

- step e): measuring an arrival time of the uplink signal with respect to the transmitting of synchronisation data of step c),

- step f): computing adjustment data by the wireless master on the basis of the arrival time and the pregiven scheduled transmit time,

- step g): transmitting the adjustment data from the wireless master to the wireless slave in a downlink signal, and

- step h): adjusting the parameter of the wireless salve in dependency of the adjustment data and repeating at least step c).

Preferably the industrial control system provides bi-directional communication using Time Division Duplex. Thus it is compatible with common control systems subjected to real time constraints.

The adjustment data in step e) may consist of one bit only, and in step g) adjusting the parameter is performed by increasing or decreasing the parameter by a predetermined value in accordance with said one bit. This one bit for synchronisation rarely burdens the communication in the wireless network.

Furthermore, steps b) to g) may be performed continuously during operation of the industrial control system. This enables continuous synchronisation even in dynamic systems where transmission paths change during operation.

Modulation of all downlink and uplink signals may be based on Orthogonal Frequency Division Multiplex (OFDM). This guarantees highly reliable communication as required in security relevant systems.

The present invention will now be explained in more detail along with the attached drawings, showing in:

FIG 1     a first wireless synchronisation cycle;
FIG 2     a second wireless synchronisation cycle;
FIG 3     a third wireless synchronisation cycle;
FIG 4     a conventional $\alpha$ Tracker; and
FIG 5     a modified $\alpha$ Tracker.

The following embodiments represent preferred examples of the present invention.

At high level, the proposed solution is to synchronise the ends of the wireless links very tightly and accurately together using the air interface. Once this is done, the remote wireless node (the Wireless Slave) can act as a timing proxy for the proximate wireless node (the Wireless Master). From the perspective of the timing protocols, the network ends with Wireless Master for those nodes connected to it. On the other side the timing network begins with the Wireless Slave for those nodes connected to it. Thus the Wireless Master makes no attempt to forward any timing packets over the air interface. This also provides a benefit in terms of reduced load on the air interface, effectively avoiding duplication of synchronisation, given that tight synchronisation is necessary in any event, for the purpose of supporting the wireless communications.

Tight synchronisation between wireless end points needs to take account of the propagation delay and the multipath propagation. These effects can only be fully accounted for by implementing a three way exchange between the Wireless Master and Wireless Slave. Specifically:

- The Wireless Master transmits e.g. a regular sync word as synchronisation data.
- The Wireless Slave synchronises to the sync word received from the Wireless Master and adjusts its transmit timing in accordance with the received timing of the sync word and a parameter that is initially set to zero.
- The Wireless Master measures the arrival time of the transmit signal from the Wireless Slave and uses this to compute an adjustment signal that it transmits to the Wireless Slave to make the adjustment.

In this way the effects of propagation delay and multipath propagation can be fully compensated for provided the synchronisation measurements are consistent at both ends of the link. We will return to this topic later.

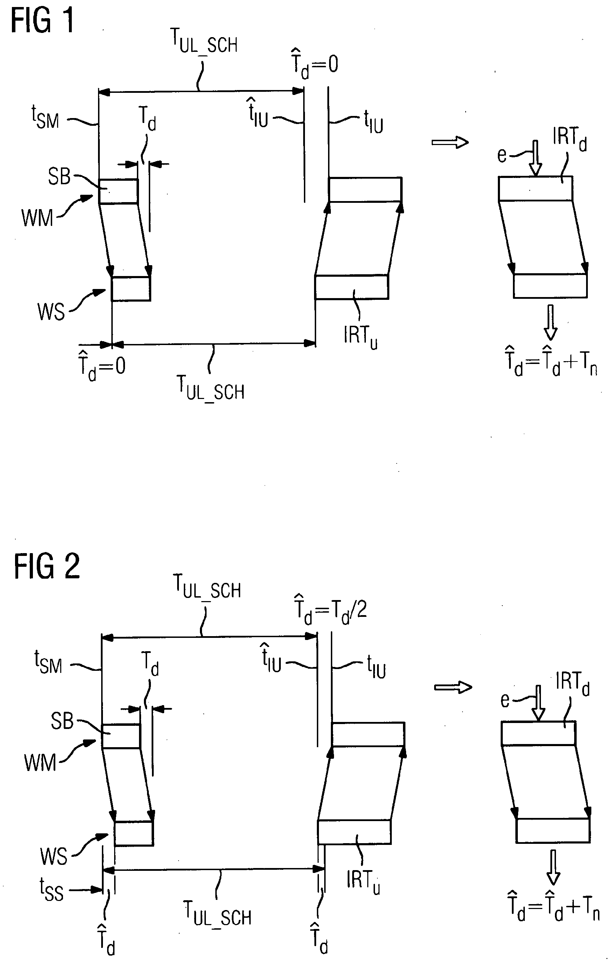

The operation of the synchronisation between Wireless Master and Wireless Slave is illustrated in FIGs 1 to 3. In the diagrams the uplink and downlink telegrams (here also called 'uplink signals' and 'downlink signals') are referred to as 'IRT$_u$' and 'IRT$_d$', respectively, which denotes Isochronous Real Time.

FIG 1 shows the condition at start up; i.e. after configuration but in the first actual cycle. At this point we assume that signalling during the configuration phase has established the value for the 'Nominal Delay to Uplink IRT Telegram' , $T_{ul\_sch}$, from the start ts of the cycle at the Wireless Master WM. Further we assume that this period $T_{ul\_sch}$ has been communicated to the Wireless Slave WS, also as part of the configuration phase.

The operation proceeds as follows:

- The Wireless Master WM transmits a sync burst SB as synchronisation data at the beginning of the cycle $t_{SM}$.
- The Wireless Slave WS receives the sync burst SB and notes its arrival time. At this point, because it has no other information, the Wireless Slave uses a propagation delay estimate value, $\hat{T}_d$ equal to zero. The Wireless Slave therefore sets its estimate of the cycle start time equal to the arrival time of the start of the sync burst SB. At this stage, of course, this assumption is incorrect by an amount equal to the one-way propagation delay $T_d$.
- The Wireless Slave WS next needs to transmit its IRT uplink telegram IRT$_u$ so as to arrive at the Wireless Master $T_{ul\_sch}$ after the start of the cycle. In the absence of any accumulated propagation delay estimate value, it begins its transmission $T_{ul\_sch}$ after the sync burst arrival time.
- The Wireless Master WM notes the time at which it expects to receive the beginning of the IRT uplink telegram at $\hat{t}_{IU}$. As we can see in FIG 1, because of the round trip propagation delay, the start of the IRT uplink telegram IRT$_u$ arrives later than this.
- The Wireless Master WM notes that the IRT uplink telegram IRT$_u$ arrived at $t_{IU}$ and, thus, after the expected time $\hat{t}_{IU}$ (i.e. late). Therefore, in a IRT downlink telegram IRT$_d$ it signals its 'Nudge' bit to nudge early e.
- The Wireless Slave WS receives the IRT downlink telegram IRT$_d$ and decodes its Nudge bit and notes that it is set to early 'e'. It therefore increases its delay estimate value, $\hat{T}_d$ by the nudge increment, $T_n$ so that, at this point, we have $\hat{T}_d = T_n$ (because previously we had $\hat{T}_d = 0$). The Wireless Slave WS will use this new delay estimate value in the next (Profinet) cycle.

In practice, the value of $T_n$ will typically be set very small so that it will take many cycles to accumulate the necessary propagation delay estimate. However, for the purposes of illustration, here we assume a large value of $T_n$, actually equal to one half of the propagation delay, i.e. $T_n = T_d/2$

We now consider what happens in the second cycle - FIG 2. For the slave the cycle begins with $\hat{T}_d = T_n = T_d/2$. The first point of note is that the Wireless Slave's perception of the cycle time start $t_{ss}$ has been advanced by $\hat{T}_d$, which in this case is equal to $T_d/2$. Thus at this point the perceived cycle time start is more accurate although still incorrect. The operations of the cycle continue as before except that, firstly, the period $T_{ul\_sch}$, now begins at the Wireless Slave's cycle start time, which is no longer the same as the measured start time of the received sync burst SB. Secondly, the transmit time of the IRT uplink telegram IRT$_u$ is advanced by $\hat{T}_d$ with respect to its new nominal time.

We can see that the transmission is earlier but still not early enough to arrive at the expected time at the Wireless Master WM. The Wireless Master WM therefore again declares the telegram arrival 'late' and sends a further Nudge bit set to nudge early 'e'. This causes the Wireless Slave WS to set its propagation delay estimate to $\hat{T}_d = 2.T_n = T_d$, which will be applied in the next cycle.

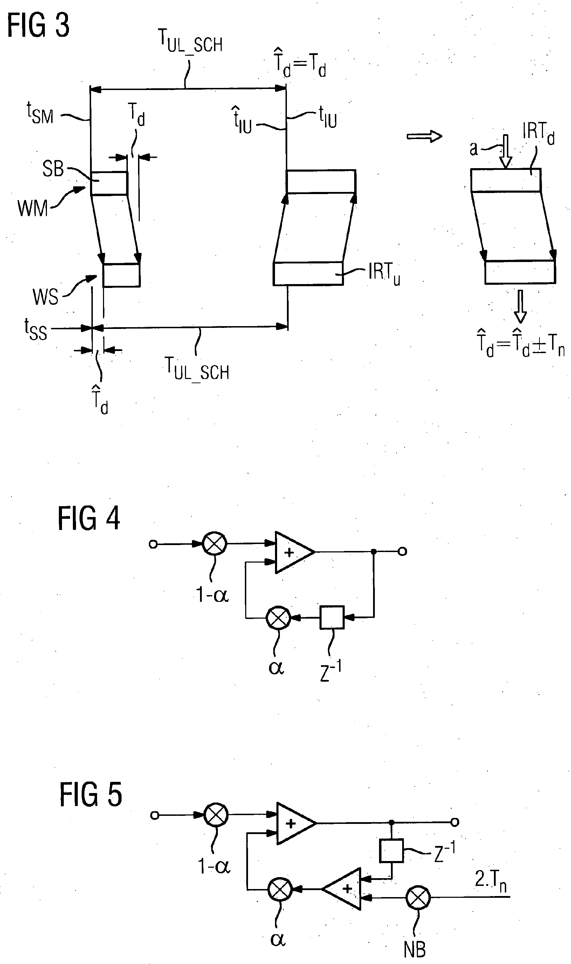

We illustrate the operation of the third cycle in FIG 3. Again the Wireless Slave's start of cycle $t_{ss}$ is advanced by $\hat{T}_d$ which is now equal to $T_d$, i.e. the correct value. The transmission time of the uplink IRT telegram IRT$_u$ is also advanced by $T_{\hat{d}}$, which now brings the reception time at the Wireless Master to the expected time.

In practice there will be a small difference one way or the other so the Nudge bit will be either early or late, i.e. arbitrary 'a'. Following this the value of the propagation delay estimate will 'hunt' around the correct value. In the above description the width of hunting is significant, but this is only for illustration purposes. In a real system the value of $T_n$ could be as little as 1 ns and is unlikely to exceed 10 ns. The use of a small value of $T_n$ increases the effective time constant of the timing control loop in such a way as to average over measurement errors due to noise and/or multipath propagation.

Using the above approach it should be possible to achieve accuracy / jitter levels in the order of ±10 ns. The above approach has the benefit that syncronisation is maintained by the wireless transmission using just one bit in the IRT part of every cycle. This combines very low overhead with isochronous transfer of the sync control information. This bit is added to the RF waveform for the IRT telegram prior to transmission and removed after reception.

Note that the ordering and timings of the various messages within the synchronisation process as shown in FIG 1, FIG 2 and FIG 3 are not intended to be prescriptive. Any ordering or timing within the cycle is possible. For example, if the Sync Burst SB from the Wireless Master WM is transmitted later than the start of the cycle $t_{SM}$, then provided the applied delay is known, the Wireless Slave WS can take account of this. In fact, even if the Sync Burst from the Wireless Master were transmitted after the IRT telegrams, operation would still be possible. In this event, the timings would be measured/computed using the Sync Burst from the previous cycle. Similarly, if the Downlink telegram was transmitted before the Uplink telegram within a cycle, the computation of the Nudge bit in the Wireless Master would be based on the reception time of the Uplink telegram in the previous cycle. However, this approach is unlikely to be required given that typically the Uplink telegrams carry Sensor information that is required before the control information is passed back.

We now return to the approach to measure the arrival time of the signal for the purposes of synchronisation. The normal approach to time measurement in a wireless system is to attempt to determine the line of sight path delay. In order to measure the time of arrival of the line of sight path it is necessary to resolve this path from the other, later, multipath components. However, in the rich multipath environment that applies in an indoor environment this is extremely challenging. Typically there are a large number of paths with delays that span several sample periods. The delay separation between adjacent paths is very often less than the sample interval. Independent measurement of the arrival time of the line of sight path therefore frequently requires the use of super-resolution techniques that are computationally intensive, usually requiring floating point arithmetic.

Moreover the statistical performance of such algorithms is generally not particularly good. However, measurement of the line of sight delay is not an actual requirement, provided time transfer can be achieved without this. The normal reason that this is mandated is to minimise inconsistency between time of arrival measurements at both ends of the radio link. Here the use of a symmetrical, reciprocal TDD structure, provides a solution. Because of reciprocity, if identical time of arrival measurement algorithms are applied at both ends of the link then it does not matter if these add an indeterminate offset to the delay measurement. Provided this offset is the same at both ends of the link it will be removed in the time transfer algorithm - effectively being added to the propagation delay that, as we have seen, is calibrated out. Given this, the design goal should be to use a time of arrival algorithm that maximises consistency between measurements at both ends of the link, rather than necessarily minimising excess delay.

An approach that intuitively is consistent with this goal is to measure the weighted mean arrival time defined as

$$\hat{d}_k = \frac{\sum_i i \left| s_i^k \right|^2}{\sum_i \left| s_i^k \right|^2} \quad,$$

where $\hat{d}_k$ is the $k$ th delay measurement in samples and the $s_i^k$ are the uniformly spaced sample values of the $k$ th estimated channel impulse response. Note, also that where diversity is used, averaging is applied over the diverse channels separately in the numerator and denominator of the expression for $\hat{d}_k$.

This would be expected to be a reasonable approach because, whilst individual paths will fluctuate in amplitude, this method will avoid any abrupt path switching such as might arise if, for example, the strongest path sample were selected. Such abrupt switching could easily happen at different times at both ends of the link, depending on the relative sampling instants. The weighted mean arrival time will give an arrival time that does not generally align exactly with a sample instant and that varies smoothly as the channel fades. Such an arrival time measurement can readily be averaged over many cycles to obtain smoothed arrival time measurements.

A practical arrangement for achieving this would be to use a first order digital recursive filter, also known as an $\alpha$ tracker, where $\alpha$ is the value of the forgetting factor. The well known structure for this is shown in FIG 4. The Z-1 block implements a one-sample delay. In this case the sample period is equal to a full control cycle. The averaging time constant is equal to $^1/_{(1-\alpha)}$ samples. A suitable value for $\alpha$ might be 0.99, corresponding to a time constant of 100 cycles. For the measurements in the Wireless Slave the averaging can be performed by straightforwardly applying the successive computed time values, $\hat{d}_k$ to the input of the $\alpha$ tracker.

However, the averaging in the Wireless Master must take account of the effect of the control cycle. If the nudge sign in the previous cycle was positive (i.e. early) then we know that the timing of the previous measure-

ments will be $2.T_n$ later than that of the current measurement (since the current measurement is earlier by $2.T_n$). We must therefore adjust the cumulative average that is fed back in the $\alpha$ tracker by this amount.

This can be achieved by modifying the $\alpha$ tracker schematic as shown in FIG 5, where the 'remembered' part of the average is adjusted by $2.T_n$ multiplied by a nudge bit sign NB to take account of anticipated shifts in the timing of the signal from the Wireless Slave.

In general, the accumulated value of $2.\hat{T}_d$ in the Wireless Slave receiver will not correspond to a whole number of samples. Thus the time of transmission for the Wireless Slave will not correspond to an exact sample position. It will therefore be necessary to introduce a fractional sample offset to the transmitted OFDM symbols. This can be done by applying the appropriate phase ramp to the sub-carriers in the frequency domain prior to performing the inverse Fourier transform. If the modulation format used is not OFDM then alternative means of establishing fractional sample offsets may be used. For example, if filtered single carrier modulation is used then an interpolating filter can be used to introduce a fractional sample offset.

Once the Wireless Master and Wireless Slave are synchronised together, the Wireless Slave's cycle start time is tightly matched to the Wireless Master's cycle start time. This can facilitate continuity of synchronisation between devices on either side of the wireless boundary using the following proxy method:

A standard network device in the Wireless Master is synchronised to the sync master using the network's standard timing protocol. One example is the PROFINET Precision Time Control Protocol, PTCP. In turn this provides control signals that synchronise the Wireless Master clock, which will be physically separate from the network clock. In practical terms, synchronisation of the Wireless Master clock will consist in counter slipping or incrementing towards the end of each control cycle to hold the Wireless Master in sync. For example, at 100 MHz, this corresponds to a maximum jitter of 10 ns. On this basis the Wireless Master 'knows' the cycle start time of the sync master. In order to smooth the impact of the jitter caused by the 10 ns steps on the RF interface it might be preferable to 'ramp' the timing of the Wireless Master to the required timing over a suitable period.

The known Wireless Master cycle start time is transferred to the Wireless Slave using the principles described above. The timing protocol defined to this point allows the Wireless Slave to act as timing master for any devices connected to it. However, the time is ambiguous in that it is known accurately within a cycle, but which cycle is not known. Non real time sync messages are transferred from the Wireless Master to the Wireless Slave to synchronise the absolute cycle count in the Wireless Slave to that in the Wireless Master. It is noted that delay in forwarding due to the wireless functions might possibly cause the count to be in error by up to 1 cycle. This can be remedied in various ways. One proposed such way is to arrange for the Wireless Master to send the least (say 4) significant bits (LSB) of its absolute cycle count in its IRT downlink telegram. Rounding down NRT based cycle count to match the LSB bits would compensate for any over-run error.

The Wireless Slave filters the non real time telegrams coming from the Wireless Master to remove any sync messages. It then operates the time transfer protocol, acting as sync master for all devices connected downstream.

The advantage of the proxy timing advance concepts are as follows:

- Transparent operation of wired timing protocols
- Negligible overhead in the real time air interface to provide time synchronisation (beyond that already required to support wireless communications)
- Highly accurate timing and
- Inherent timing advance in the wireless air interface to maximise efficiency.

**Claims**

1. Industrial control system including

   - a controller,
   - an equipment to be controlled by the controller,
   - a wireless network having a wireless master (WM) wire-connected to the controller and a wireless slave (WS) wire-connected to the equipment, wherein
   - the controller is designed to perform timing control of the wireless master (WM) according to a timing protocol,
   - the wireless master (WM) is configured to terminate the timing control and to transmit a system time value to the wireless slave (WS),
   - the wireless slave (WS) is designed to synchronize to the wireless master (WM) and to initiate timing control of the equipment according to the timing protocol on behalf of the controller,

   **characterized in that**
   the wireless network being configured to perform the following steps for synchronising the wireless master with the wireless slave:

      - step a): transmitting a pregiven scheduled transmit time period ($T_{UL\_SCH}$) to the wireless slave (WS),
      - step b): transmitting synchronisation data from the wireless master (WM) to the wireless slave (WS),

- step c): setting a transmit timing of the wireless slave (WS) in dependency of the pregiven scheduled transmit time period ($T_{UL\_SCH}$) and a parameter ($\hat{T}_d$),

- step d): transmitting a uplink signal ($IRT_u$) from the wireless slave (WS) to the wireless master (WM) in accordance with the transmit timing,

- step e): measuring an arrival time ($t_{IU}$) of the uplink signal ($IRT_u$) with respect to the transmitting of synchronisation data of step c),

- step f): computing adjustment data by the wireless master on the basis of the arrival time and the pregiven scheduled transmit time,

- step g): transmitting the adjustment data from the wireless master (WM) to the wireless slave (WS) in a downlink signal ($IRT_d$), and

- step h): adjusting the parameter ($\hat{T}_d$) of the wireless slave (WS) in dependency of the adjustment data and repeating at least step c).

2. Industrial control system according to claim 1, wherein the wireless master (WM) is embedded as node in a wired network of the industrial control system.

3. Industrial control system according to one of the preceding claims, wherein the wireless master (WM) includes a first order digital recursive filter for measuring the arrival time ($t_{IU}$) in step e).

4. Industrial control system according to claim 3, wherein a time increment depending on the parameter ($\hat{T}_d$) is added in a feedback loop of the first order digital recursive filter.

5. Method of performing timing control in an industrial control system including a controller, an equipment to be controlled by the controller, a wireless network having a wireless master (WM) wire-connected to the controller and a wireless slave (WS) wire-connected to the equipment, wherein

- the controller performs timing control of the wireless master (WM) according to a timing protocol,

- the wireless master (WM) terminates the timing control and transmits a system time value to the wireless slave (WS),

- the wireless slave (WS) synchronizes to the wireless master (WM) and initiates timing control of the equipment according to the timing protocol on behalf of the controller,

**characterized by**

the following steps for synchronising the wireless master (WM) with the wireless slave (WS):

- step a): transmitting a pregiven scheduled transmit time period ($T_{UL-SCH}$) to the wireless slave (WS),

- step b): transmitting synchronisation data (SB) from the wireless master (WM) to the wireless slave (WS),

- step c): setting a transmit timing of the wireless slave (WS) in dependency of the pregiven scheduled transmit time period ($T_{UL\_SCH}$) and a parameter ($\hat{T}_d$),

- step d): transmitting an uplink signal ($IRT_u$) from the wireless slave to the wireless master (WM) in accordance with the transmit timing,

- step e): measuring an arrival time ($t_{IU}$) of the uplink signal ($IRT_u$) with respect to the transmitting of synchronisation data of step c),

- step f): computing adjustment data by the wireless master (WM) on the basis of the arrival time ($t_{IU}$) and the pregiven scheduled transmit time ($T_{UL\_SCH}$),

- step g): transmitting the adjustment data from the wireless master (WM) to the wireless slave (WS) in a downlink signal ($IRT_d$), and

- step h): adjusting the parameter ($\hat{T}_d$) of the wireless salve in dependency of the adjustment data and repeating at least step c).

6. Method according to claim 5, wherein the industrial control system provides bi-directional communication using Time Division Duplex.

7. Method according to claim 5 or 6, wherein the adjustment data in step f) consists of one bit only, and in step h) adjusting the parameter ($T_d$) is performed by increasing or decreasing the parameter ($T_d$) by a predetermined value in accordance with said one bit.

8. Method according to one of the claims 5 to 7, wherein steps b) to h) are performed continuously during operation of the industrial control system.

9. Method according to one of the claims 5 to 8, wherein modulation of all downlink and uplink signals ($IRT_d$, $IRT_u$) are based on Orthogonal Frequency Division Multiplex (OFDM).

**Patentansprüche**

1. Industrielles Steuersystem, das enthält:

- eine Steuereinheit,
- ein Gerät, das durch die Steuereinheit zu steuern ist,
- ein drahtloses Netz mit einem drahtlosen Master (WM), der mit der Steuereinheit drahtverbunden ist, und einem drahtlosen Slave (WS), der mit dem Gerät drahtverbunden ist, wobei
- die Steuereinheit gestaltet ist, eine Zeitsteuerung des drahtlosen Masters (WM) gemäß einem Zeitprotokoll auszuführen,

- der drahtlose Master (WM) konfiguriert ist, die Zeitsteuerung zu beenden und einen Systemzeitwert an den drahtlosen Slave (WS) zu liefern,

- der drahtlose Slave (WS) gestaltet ist, sich mit dem drahtlosen Master (WM) zu synchronisieren und eine Zeitsteuerung des Geräts gemäß dem Zeitprotokoll im Namen der Steuereinheit einzuleiten,

**dadurch gekennzeichnet, dass**

das drahtlose Netz konfiguriert ist, die folgenden Schritte zum Synchronisieren des drahtlosen Masters mit dem drahtlosen Slave auszuführen:

- Schritt a): Senden einer vorgegebenen geplanten Sendezeitdauer ($T_{UL\_SCH}$) an den drahtlosen Slave (WS),
- Schritt b) : Senden von Synchronisationsdaten von dem drahtlosen Master (WM) an den drahtlosen Slave (WS),
- Schritt c): Einstellen einer Sendezeiteinstellung des drahtlosen Slave (WS) in Abhängigkeit von der vorgegebenen geplanten Sendezeitdauer ($T_{UL\_SCH}$) und einem Parameter ($T_d$),
- Schritt d): Senden eines Aufwärtsstreckensignals ($IRT_u$) von dem drahtlosen Slave (WS) an den drahtlosen Master (WM) in Übereinstimmung mit der Sendeplanung,
- Schritt e) : Messen einer Ankunftszeit ($t_{IU}$) des Aufwärtsstreckensignals ($IRT_u$) in Bezug auf das Senden von Synchronisationsdaten von Schritt c),
- Schritt f): Berechnen von Anpassungsdaten durch den drahtlosen Master aufgrund der Ankunftszeit und der vorgegebenen geplanten Sendezeit,
- Schritt g): Senden der Anpassungsdaten von dem drahtlosen Master (WM) an den drahtlosen Slave (WS) in einem Abwärtsstreckensignal ($IRT_d$) und
- Schritt h): Anpassen des Parameters ($T_d$) des drahtlosen Slave (WS) in Abhängigkeit von den Anpassungsdaten und Wiederholen zumindest von Schritt c).

2. Industrielles Steuersystem nach Anspruch 1, wobei der drahtlose Master (WM) als ein Knoten in ein verdrahtetes Netz des industriellen Steuersystems eingebettet ist.

3. Industrielles Steuersystem nach einem der vorhergehenden Ansprüche, wobei der drahtlose Master (WM) ein digitales rekursives Filter erster Ordnung enthält, um die Ankunftszeit ($t_{IU}$) in Schritt e) zu messen.

4. Industrielles Steuersystem nach Anspruch 3, wobei eine Zeiterhöhung, die von dem Parameter ($\hat{T}_d$) abhängt, in eine Rückkopplungsschleife des digitalen rekursiven Filters erster Ordnung hinzugefügt ist.

5. Verfahren zum Ausführen einer Zeitsteuerung in einem industriellen Steuersystem, das eine Steuereinheit, ein durch die Steuereinheit zu steuerndes Gerät, ein drahtloses Netz mit einem drahtlosen Master (WM), der mit der Steuereinheit drahtverbunden ist, und einem drahtlosen Slave (WS), der mit dem Gerät drahtverbunden ist, enthält, wobei

- die Steuereinheit eine Zeitsteuerung des drahtlosen Masters (WM) gemäß einem Zeitprotokoll ausführt,
- der drahtlose Master (WM) die Zeitsteuerung beendet und einen Systemzeitwert an den drahtlosen Slave (WS) sendet,
- sich der drahtlose Slave (WS) mit dem drahtlosen Master (WM) synchronisiert und eine Zeitsteuerung des Geräts gemäß dem Zeitprotokoll im Namen der Steuereinheit einleitet,

**gekennzeichnet durch** die folgenden Schritte zum Synchronisieren des drahtlosen Masters (WM) mit dem drahtlosen Slave (WS):

- Schritt a): Senden einer vorgegebenen geplanten Sendezeitdauer ($T_{UL\_SCH}$) an den drahtlosen Slave (WS),
- Schritt b): Senden von Synchronisationsdaten (SB) von dem drahtlosen Master (WM) an den drahtlosen Slave (WS),
- Schritt c): Einstellen einer Sendezeiteinstellung des drahtlosen Slave (WS) in Abhängigkeit von der vorgegebenen geplanten Sendezeitdauer ($T_{UL\_SCH}$) und einem Parameter ($\hat{T}_d$),
- Schritt d): Senden eines Aufwärtsstreckensignals ($IRT_u$) von dem drahtlosen Slave an den drahtlosen Master (WM) in Übereinstimmung mit der Sendezeiteinstellung,
- Schritt e) : Messen einer Ankunftszeit ($t_{IU}$) des Aufwärtsstreckensignals ($IRT_u$) in Bezug auf das Senden von Synchronisationsdaten von Schritt c),
- Schritt f): Berechnen von Anpassungsdaten **durch** den drahtlosen Master (WM) aufgrund der Ankunftszeit ($t_{IU}$) und der vorgegebenen geplanten Sendezeit ($T_{UL\_SCH}$),
- Schritt g): Senden der Anpassungsdaten von dem drahtlosen Master (WM) an den drahtlosen Slave (WS) in einem Abwärtsstreckensignal ($IRT_d$) und
- Schritt h): Anpassen des Parameters ($\hat{T}_d$) des drahtlosen Slave (WS) in Abhängigkeit von den Anpassungsdaten und Wiederholen zumindest von Schritt c).

**6.** Verfahren nach Anspruch 5, wobei das industrielle Steuersystem eine bidirektionale Kommunikation unter Verwendung von Zeitteilungsduplex bereitstellt.

**7.** Verfahren nach Anspruch 5 oder 6, wobei die Anpassungsdaten in Schritt f) aus nur einem Bit bestehen und in Schritt h) das Anpassen des Parameters ($\hat{T}_d$) durch Erhöhen oder Verringern des Parameters ($\hat{T}_d$) um einen vorgegebenen Wert in Übereinstimmung mit dem einen Bit ausgeführt wird.

**8.** Verfahren nach einem der Ansprüche 5 bis 7, wobei die Schritte b) bis h) kontinuierlich während des Betriebs des industriellen Steuersystems ausgeführt werden.

**9.** Verfahren nach einem der Ansprüche 5 bis 8, wobei die Modulation von allen Abwärtsstrecken- und Aufwärtsstreckensignalen ($IRT_d$, $IRT_u$) auf einem orthogonalen Frequenzteilungsmultiplexen (OFDM) beruht.

**Revendications**

**1.** Système de commande industrielle comprenant

- une unité de commande,
- un équipement à commander par l'unité de commande,
- un réseau sans fil ayant un maître (WM) sans fil relié par fil à l'unité de commande et un esclave (WS) sans fil relié par fil à l'équipement, dans lequel
- l'unité de commande est conçue pour effectuer une commande temporelle du maître (WM) sans fil suivant un protocole temporel,
- le maître (WM) sans fil est configuré pour mettre fin à la commande temporelle et pour transmettre une valeur de temps de système à l'esclave (WS) sans fil,
- l'esclave (WS) sans fil est conçu pour synchroniser au maître (WM) sans fil et pour faire débuter une commande temporelle de l'équipement suivant le protocole temporel au nom de l'unité de commande,

**caractérisé en ce que**
le réseau sans fil est configuré pour effectuer les stades suivants de synchronisation du maître sans fil à l'esclave sans fil :

- stade a) : transmettre à l'esclave (WS) sans fil une durée ($T_{UL\_SCH}$) de transmission planifiée donnée à l'avance,
- stade b) : transmettre des données de synchronisation du maître (WM) sans fil à l'esclave (WS) sans fil,
- stade c) : fixer une cadence de transmission de l'esclave (WS) sans fil en fonction de la durée ($T_{UL\_SCH}$) de transmission planifiée donnée à l'avance et d'un paramètre($\hat{T}_d$),
- stade d) : transmettre un signal ($IRT_u$) de liaison montante de l'esclave (WS) sans fil au maître (WM) sans fil en fonction de la cadence de transmission,
- stade e) : mesurer un temps ($t_{IU}$) d'arrivée du signal ($IRT_u$) de liaison montante par rapport à la transmission des données de synchronisation du stade c),
- stade f) : calculer des données d'ajustement par le maître sans fil sur la base du temps d'arrivée et de la durée de transmission planifiée donnée à l'avance,
- stade g) : transmettre les données d'ajustement du maître (WM) sans fil à l'esclave (WS) sans fil dans un signal ($IRT_d$) de liaison descendante, et
- stade h) : ajuster le paramètre ($\hat{T}_d$) de l'esclave (WS) sans fil en fonction des données d'ajustement et répéter au moins le stade c).

**2.** Système de commande industrielle suivant la revendication 1, dans lequel le maître (WM) sans fil est incorporé sous la forme d'un noeud dans un réseau câblé du système de commande industrielle.

**3.** Système de commande industrielle suivant l'une des revendications précédentes, dans lequel le maître (WM) sans fil comprend un filtre récursif numérique du premier ordre pour mesurer le temps ($t_{IU}$) d'arrivée dans le stade e).

**4.** Système de commande industrielle suivant la revendication 3, dans lequel l'incrément de temps dépendant du paramètre ($\hat{T}_d$) est un ajouté dans une boucle de réaction du filtre récursif numérique du premier ordre.

**5.** Procédé pour effectuer une commande temporelle dans un système de commande industrielle comprenant une unité de commande, un équipement à commander par l'unité de commande, un réseau sans fil ayant un maître (WM) sans fil relié par fil à l'unité de commande et un esclave (WS) sans fil relié par fil à l'équipement, dans lequel

- l'unité de commande effectue une commande temporelle du maître (WM) sans fil suivant un protocole temporel,
- le maître (WM) sans fil met fin à la commande temporelle et transmet une valeur de temps de système à l'esclave (WS) sans fil,
- l'esclave (WS) sans fil se synchronise au maître (WM) sans fil et fait débuter une commande temporelle de l'équipement suivant le protocole temporel au nom de l'unité de commande,

**caractérisé par**
les stades suivants de synchronisation du maître (WM) sans fil à l'esclave (WS) sans fil:

- stade a) : transmettre à l'esclave (WS) sans fil une durée ($T_{UL\_SCH}$) de transmission planifiée donnée à l'avance,
- stade b) : transmettre des données de synchronisation du maître (WM) sans fil à l'esclave (WS) sans fil,
- stade c) : fixer une cadence de transmission de l'esclave (WS) sans fil en fonction de la durée ($T_{UL\_SCH}$) de transmission planifiée donnée à l'avance et d'un paramètre ($\hat{T}_d$),
- stade d) : transmettre un signal ($IRT_u$) de liaison montante de l'esclave (WS) sans fil au maître (WM) sans fil en fonction de la cadence de transmission,
- stade e) : mesurer un temps ($t_{IU}$) d'arrivée du signal ($IRT_u$) de liaison montante par rapport à la transmission des données de synchronisation du stade c),
- stade f) : calculer des données d'ajustement par le maître sans fil sur la base du temps d'arrivée et de la durée de transmission planifiée donnée à l'avance,
- stade g) : transmettre les données d'ajustement du maître (WM) sans fil à l'esclave (WS) sans fil dans un signal ($IRT_d$) de liaison descendante, et
- stade h) : ajuster le paramètre ($\hat{T}_d$) de l'esclave (WS) sans fil en fonction des données d'ajustement et répéter au moins le stade c).

6. Procédé suivant la revendication 5, dans lequel le système de commande industrielle procure une communication bidirectionnelle en utilisant Time Division Duplex.

7. Procédé suivant la revendication 5 ou 6, dans lequel les données d'ajustement dans le stade f) consistent en un bit seulement, et dans le stade h) ajuster le paramètre ($\hat{T}_d$) s'effectue en augmentant ou en diminuant le paramètre ($\hat{T}_d$) d'une valeur déterminée à l'avance en fonction de ce un bit.

8. Procédé suivant l'une des revendications 5 à 7, dans lequel on effectue les stades b) à h) continuellement pendant le fonctionnement du système de commande industrielle.

9. Procédé suivant l'une des revendications 5 à 8, dans lequel une modulation de tous les signaux ($IRT_d$, $IRT_u$) de liaison descendante et de liaison montante reposent sur Orthogonal Frequency Division Multiplex (OFDM).

## FIG 1

## FIG 2

FIG 3

$T_{UL\_SCH}$

$\hat{T}_d = T_d$

$t_{SM}$   $T_d$   $\hat{t}_{IU}$   $t_{IU}$

SB

WM

WS

$t_{SS}$

$\hat{T}_d$

$T_{UL\_SCH}$

$a$   $IRT_d$

$IRT_u$

$\hat{T}_d = \hat{T}_d \pm T_n$

FIG 4

1-α

α   $Z^{-1}$

FIG 5

1-α

α   $Z^{-1}$

$2 \cdot T_n$

NB

**EP 2 884 806 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090310552 A1
- WO 0118997 A1
- WO 9704614 A1
- EP 2012446 A1